# DEMANDE DE BREVET EUROPEEN

(11) **EP 1 086 862 A1**
(43) Date de publication de la demande: **28.03.2001**
(21) Numéro de dépôt: 00402415.4
(22) Date de dépôt: 01.09.2000
(51) Int. Cl.: B60R 21/16, B60R 19/00

(54) **Structure métallique gonflable à chargement pyrotechnique intégré**

(30) Priorité: 24.09.1999 FR 9911963
(71) Demandeur: Livbag SNC, 91710 Vert le Petit (FR)
(72) Inventeur: Lebaudy, Franck, 91510 Lardy (FR); Perotto, Christian, 91610 Ballancourt (FR)
(74) Mandataire: Pech, Bernard

(57) **Abrégé**

La présente invention concerne un ensemble de sécurité (1) logé dans un véhicule automobile et utilisé dans le domaine de la sécurité automobile.

Cet ensemble de sécurité (1) comprend :
i) un coussin (5) métallique gonflable étanche fixé sur un support,
ii) un chargement pyrotechnique (6),
iii) un dispositif d'allumage (3) destiné à être relié à une source de courant électrique,
et il est caractérisé en ce que,
iv) le coussin est constitué à partir d'une première feuille métallique (20) qui présente un orifice central, une zone de fixation intermédiaire (22) rattachée au support ainsi qu'une zone de fixation périphérique (24) et d'une seconde feuille métallique (21) pleine bombée qui possède une zone de fixation périphérique (25), les deux feuilles métalliques étant fixées l'une à l'autre au niveau de leur zone de fixation périphérique,
v) le chargement pyrotechnique est contenu dans ledit coussin.

## Description

La présente invention se rapporte au domaine de la sécurité automobile et concerne plus spécialement un ensemble de sécurité destiné à protéger un occupant d'un véhicule automobile lors d'une collision.

Afin de limiter au maximum le risque d'accidents corporels couru par les occupants d'un véhicule automobile lors d'un choc frontal ou latéral, il a été proposé depuis une trentaine d'années d'incorporer des systèmes générateurs de gaz dans les véhicules automobiles permettant de gonfler des coussins de protection classiques en matière textile destinés à protéger le visage et le torse des occupants. Parfois même, comme décrit par exemple dans la demande de brevet allemand DE 41 16 880, la surface intérieure de ces coussins est enduite par une laque pyrotechnique.

Depuis peu, en plus de ces protections classiques, les constructeurs automobiles souhaitent incorporer de nombreux ensembles de sécurité visant, d'une part, à protéger les membres inférieurs des occupants ainsi qu'à diminuer le risque de sous-marinage, et d'autre part, à renforcer la structure même du véhicule. Dans ce type d'applications, les ensembles de sécurité doivent fonctionner dans des délais extrêmement brefs et il est donc nécessaire d'employer des chargements pyrotechniques à haut rendement qui génèrent, en des temps très courts, le volume nécessaire de gaz. Ces gaz sont souvent toxiques et ont souvent une température qui est très élevée. Les coussins de protection classiques en matière textile sont alors à bannir car ils sont susceptibles, d'une part, d'être endommagés par les gaz très chauds, et d'autre part, en raison de leur porosité, de laisser passer des gaz toxiques dans l'enceinte du véhicule.

Pour pallier ce problème, il a alors été proposé, comme décrit dans les brevets US 5,615,914 et US 5,839,756, des ensembles de sécurité comprenant chacun un générateur de gaz classique relié à un coussin métallique gonflable étanche à l'aide d'un conduit d'amenée de gaz. Mais, l'utilisation d'un générateur de gaz en tant que composant séparé confère à ces ensembles de sécurité un encombrement global et une masse trop importants, ce qui rend difficile l'incorporation de ces ensembles de sécurité en nombre élevé à bord d'un véhicule.

L'homme du métier est donc toujours à la recherche d'un ensemble de sécurité compact et de faible masse autorisant l'emploi de chargements pyrotechniques à haut rendement.

La présente invention a pour but de répondre à ce problème et concerne un ensemble de sécurité qui est logé dans un véhicule automobile et qui comprend :
i) un coussin métallique gonflable étanche fixé sur un support,
ii) un chargement pyrotechnique,
iii) un dispositif d'allumage destiné à être relié à une source de courant électrique,
   caractérisé en ce que,
iv) le coussin métallique gonflable étanche est constitué à partir d'une première feuille métallique qui présente un orifice central, une zone de fixation intermédiaire rattachée au support ainsi qu'une zone de fixation périphérique et d'une seconde feuille métallique pleine bombée qui possède une zone de fixation périphérique, les deux feuilles métalliques étant fixées l'une à l'autre au niveau de leur zone de fixation périphérique,
v) le chargement pyrotechnique est contenu dans le coussin métallique gonflable étanche.

Préférentiellement, le support est constitué par un corps cylindrique présentant une surface plane supérieure sur laquelle est fixée la première feuille métallique du coussin métallique gonflable étanche. Ce corps peut d'ailleurs être réalisé à l'aide de deux éléments distincts, le premier élément correspondant à la partie inférieure dudit corps et le second élément étant constitué par une plaque rapportée sur ledit premier élément.

Préférentiellement encore, une pièce perforée, qui est contenue dans le coussin métallique gonflable étanche et qui est fixée dans la surface plane supérieure du corps cylindrique, assure le maintien du chargement pyrotechnique.

Selon une première variante préférée de réalisation, le chargement pyrotechnique est réalisé sous la forme d'au moins une feuille plane, cette dernière étant calée entre la pièce perforée et un ressort lui-même en appui sur la surface plane supérieure du corps.

Selon une seconde variante préférée de réalisation, le chargement pyrotechnique est constitué par de la poudre en vrac.

Avantageusement, le chargement pyrotechnique est constitué par une composition pyrotechnique composite comprenant un liant silicone et une charge oxydante minérale comme par exemple un mélange de perchlorate d'ammonium et de nitrate de sodium.

Selon un premier mode préféré de réalisation de l'invention, le corps cylindrique comporte une ouverture radiale elle-même prolongée par un évidement central situé en regard de l'orifice central porté par la première feuille métallique.

Selon une première variante du premier mode préféré de réalisation de l'invention, le dispositif d'allumage, qui est constitué à l'aide d'un allumeur électro-pyrotechnique lui-même inséré dans un connecteur électrique, est fixé dans l'ouverture radiale du corps cylindrique.

Selon une seconde variante du premier mode préféré de réalisation, le dispositif d'allumage est constitué à l'aide d'un cordeau pyrotechnique de transmission et d'une charge pyrotechnique relais. De façon avantageuse, la charge pyrotechnique relais est logée dans l'ouverture radiale portée par le corps cylindrique et le cordeau pyrotechnique de transmission présente une extrémité qui est insérée dans ladite ouverture radiale et qui est au contact de la charge pyrotechnique relais.

Un ensemble de sécurité tel que décrit dans ce premier mode préféré de réalisation de l'invention est très compact car, au repos, la hauteur maximale dudit ensemble de sécurité correspond uniquement à la somme de la hauteur du corps et de la distance maximale séparant la première feuille métallique de la seconde feuille métallique pleine bombée.

Selon un second mode préféré de réalisation de l'invention, le corps cylindrique est constitué par une plaque discoïde présentant une paroi latérale, ladite plaque discoïde étant traversée par un canal radial qui débute dans ladite paroi latérale et qui se termine par au moins deux terminaisons élargies dans la surface plane supérieure. Selon la masse du chargement pyrotechnique employé, il pourra être nécessaire d'augmenter le nombre de terminaisons élargies.

Préférentiellement, le canal radial contient deux électrodes conductrices du courant électrique et chacune des deux terminaisons élargies du canal radial contient une perle d'allumage connectée électriquement aux deux électrodes.

Un ensemble de sécurité tel que décrit dans ce second mode préféré de réalisation de l'invention est encore plus compact car le corps est en fait réduit à une plaque discoïde de faible épaisseur.

De manière générale, il pourra être avantageux de placer des joints d'étanchéité entre la première feuille métallique et la surface plane supérieure du corps cylindrique.

La présente invention concerne également l'utilisation d'un ou de plusieurs ensembles de sécurité tels que décrits ci-dessus :
- à l'avant de la partie assise d'un siège d'un passager pour surélever ce dernier dans les tout premiers instants suivant une collision, ce qui permet de diminuer grandement le risque de sous-marinage,
- dans la partie basse de la planche de bord afin de protéger les membres inférieurs des passagers avant du véhicule lors d'une collision,
- pour augmenter la résistance mécanique de certaines parties de la structure du véhicule lors d'une collision, par exemple les pare-chocs, les portes latérales.

On décrit ci-après aux figures 1 à 4 quatre exemples de réalisation d'un ensemble de sécurité selon l'invention.

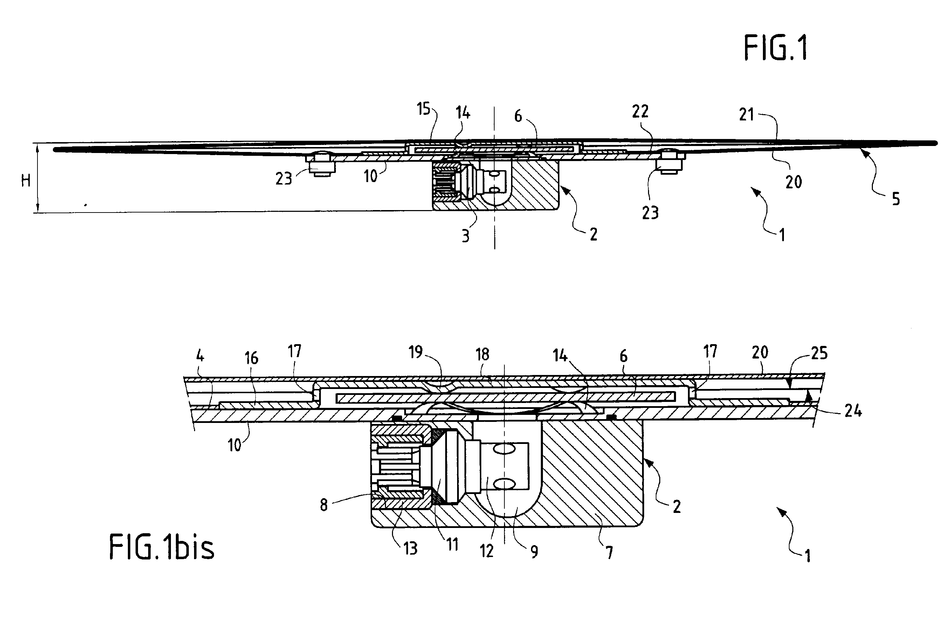

La figure 1 est une vue en coupe d'un ensemble de sécurité selon la première variante du premier mode préféré de réalisation de l'invention.

La figure 1bis est une vue partielle agrandie de l'ensemble de sécurité représenté à la figure 1.

La figure 2 est une vue en coupe d'un ensemble de sécurité selon la seconde variante du premier mode préféré de réalisation de l'invention.

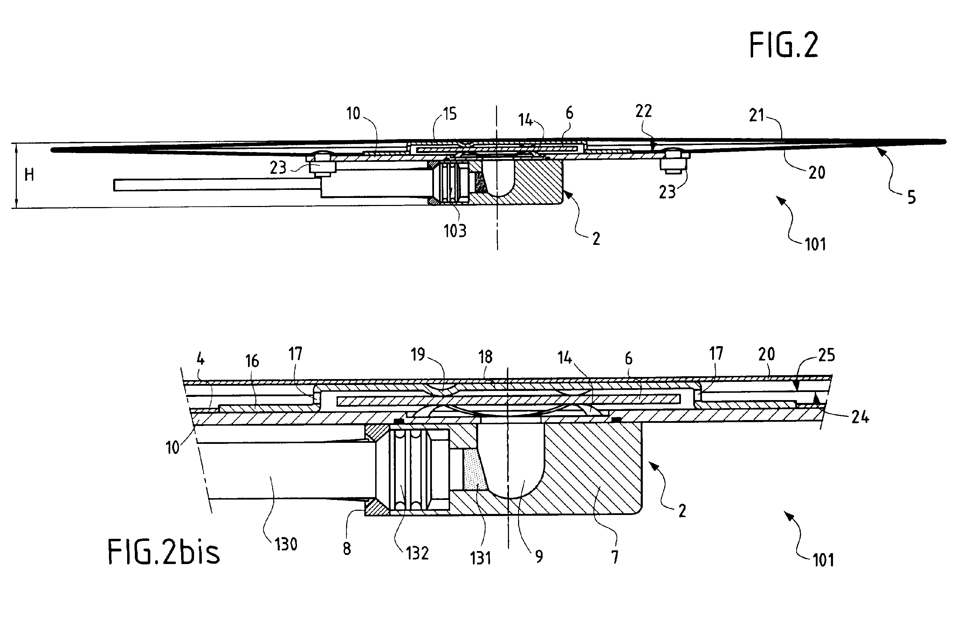

La figure 2bis est une vue partielle agrandie dè l'ensemble de sécurité représenté à la figure 2.

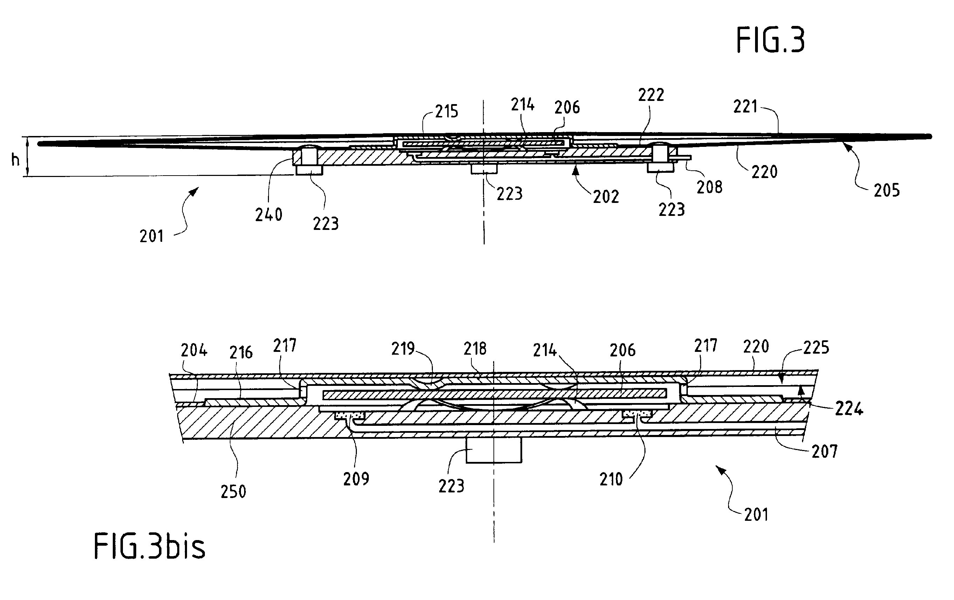

La figure 3 est une vue en coupe d'un ensemble de sécurité selon le second mode préféré de réalisation de l'invention.

La figure 3bis est une vue partielle agrandie de l'ensemble de sécurité représenté à la figure 3.

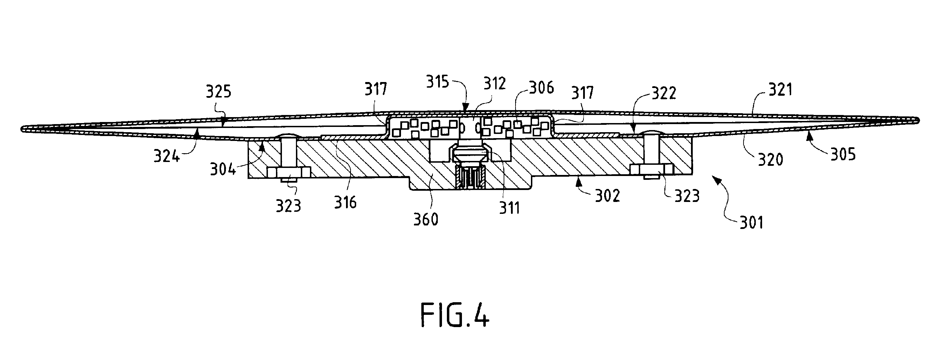

La figure 4 est une vue en coupe d'un ensemble de sécurité dans lequel le chargement pyrotechnique est constitué par de la poudre en vrac.

En se référant aux figures 1, 1bis, 2 et 2bis, on observe qu'un ensemble de sécurité 1 selon la première variante du premier mode préféré de réalisation de l'invention ou qu'un ensemble de sécurité 101 selon la seconde variante du premier mode préféré de réalisation de l'invention est constitué à partir d'un corps 2 cylindrique qui, d'une part, contient un dispositif d'allumage 3 ou 103 qui sera décrit en détail plus loin, et d'autre part, présente une surface plane supérieure 4 sur laquelle est rapporté un coussin 5 métallique gonflable étanche renfermant un chargement pyrotechnique.

Plus précisément, le corps 2 cylindrique est constitué à partir d'un premier élément inférieur 7 qui possède une ouverture radiale 8 se prolongeant par un évidement central 9 et d'un second élément supérieur réalisé sous la forme d'une plaque circulaire 10 portant une perforation centrale. L'élément inférieur 7 et la plaque circulaire 10 sont fixés l'un à l'autre par soudure et de façon à que l'évidement central 9 soit situé en regard de la perforation centrale de la plaque circulaire 10.

Le chargement pyrotechnique, qui est constitué par une composition pyrotechnique composite comprenant un liant silicone et une charge oxydante à base essentiellement de perchlorate d'ammonium et de nitrate de sodium, est réalisé sous la forme d'une feuille plane 6 qui est calée entre un ressort 14 et une pièce perforée 15. Le ressort 14 est placé en appui sur la surface plane supérieure 4 au niveau d'un renfoncement interne circulaire qui entoure la perforation centrale portée par la plaque circulaire 10. La pièce perforée 15 a la forme d'une coupelle comportant un anneau 16 périphérique rattaché par soudure à la surface supérieure 4, une paroi latérale portant des orifices 17 et un disque central 18 doté de bossages 19 qui sont au contact de la feuille plane 6.

Le coussin 5 métallique gonflable étanche est constitué à partir d'une première feuille métallique 20 et d'une seconde feuille métallique 21 pleine bombée, les deux feuilles métalliques 20, 21 étant en acier. Plus précisément, la première feuille métallique 20 possède un orifice central lui permettant d'encercler l'anneau 16 de la pièce perforée 15 et comporte une zone de fixation intermédiaire 22 qui est fixée par filetage dans la plaque circulaire 10 au moyen de boulons 23. La première feuille métallique 20 et la seconde feuille métallique 21 possèdent chacune une zone de fixation périphérique 24, 25 et sont fixées par soudure l'une à l'autre au niveau de leur zone de fixation périphérique 24, 25.

En se référant aux figures 1 et 1 bis, on observe que le dispositif d'allumage 3 de l'ensemble de sécurité 1 est réalisé à l'aide d'un allumeur 11 électro-pyrotechnique classique qui possède une tête d'allumage 12 et qui est intégré dans un connecteur électrique 13. Le dispositif d'allumage 3 ainsi constitué est inséré dans l'ouverture radiale 8 de l'élément inférieur 7 de façon à ce que la tête d'allumage 12 soit disposée dans l'évidement central 9. L'alimentation électrique peut alors être réalisée à l'aide d'un circuit électrique présentant une première extrémité venant s'emboîter dans le connecteur électrique 13 et une seconde extrémité reliée à une unité centrale de commande.

En se référant aux figures 2 et 2 bis, on observe que le dispositif d'allumage 103 de l'ensemble de sécurité 101 est constitué à l'aide d'un cordeau pyrotechnique de transmission 130 souple qui est représenté non coupé sur lesdites figures 2 et 2bis et d'une charge pyrotechnique relais 131. Plus précisément, la charge pyrotechnique relais 131 est logée dans l'ouverture radiale 8 au voisinage de l'évidement central 9. Le cordeau pyrotechnique de transmission 130 souple présente, d'une part, une première extrémité filetée 132 qui est introduite dans l'ouverture radiale et qui est au contact de ladite charge pyrotechnique relais 131, et d'autre part, une seconde extrémité destinée à être raccordée à une unité centrale de commande.

En fonctionnement, les ensembles de sécurité 1 et 101 agissent de la façon suivante. Lorsque l'unité centrale de commande détecte une collision nécessitant la mise en fonctionnement dudit ensemble de sécurité 1 ou 101, elle active le dispositif d'allumage 3 ou 103 correspondant. Ce dernier génère des gaz chauds dans l'évidement central 9 de l'élément inférieur 7 et ces gaz traversent la perforation centrale de la plaque circulaire 10 pour finalement initier la combustion de la feuille plane 6 constituant le chargement pyrotechnique. Par combustion, celle-ci produit alors, dans des délais très brefs, des gaz chauds qui traversent les orifices 17 de la paroi latérale de la pièce perforée 15 et qui permettent de gonfler totalement et à partir de son centre le coussin 5 métallique gonflable étanche.

Ces ensembles de sécurité 1,101 sont effectivement très compacts car ils possèdent une hauteur maximale H de l'ordre de 2 cm.

Par ailleurs, en fonction de l'emplacement et de l'utilisation souhaités de l'ensemble de sécurité 1, 101, la première feuille métallique 20 et la seconde feuille métallique 21 peuvent avoir une forme générale circulaire, ou rectangulaire, ou encore triangulaire par exemple.

Enfin, le chargement pyrotechnique peut également être réalisé à l'aide d'une poudre en vrac contenue dans un sachet combustible qui est lui-même maintenu par la pièce perforée 15.

En se référant aux figures 3 et 3bis, on observe qu'un ensemble de sécurité 201 selon le second mode préféré de réalisation de l'invention est constitué à partir d'un corps 202 cylindrique qui, d'une part, contient un dispositif d'allumage, et d'autre part, présente une surface plane supérieure 204 sur laquelle est rapporté un coussin 205 métallique gonflable étanche renfermant un chargement pyrotechnique.

Plus précisément, le corps 202 a la forme d'une plaque discoïde 250. Cette plaque discoïde 250 présente une paroi latérale 240 et comporte un canal radial 207 qui, d'une part, débute dans ladite paroi latérale 240, et d'autre part, se termine par deux terminaisons élargies dans la surface plane supérieure 204. Le dispositif d'allumage est constitué à partir de deux fils électriques contenus dans une gaine 208, cette gaine 208 étant elle-même glissée à l'intérieur du canal radial 207. Une première perle d'allumage 209 est introduite dans l'une des deux terminaisons élargies du canal radial 207 et une seconde perle d'allumage 210 est introduite dans l'autre terminaison élargie. Ces deux perles d'allumage 209, 210 sont branchées en parallèle sur les deux fils électriques contenus dans la gaine 208 et ces derniers sont reliés à une unité de centrale électronique.

Le chargement pyrotechnique, qui est constitué par une composition pyrotechnique composite comprenant un liant silicone et une charge oxydante à base essentiellement de perchlorate d'ammonium et de nitrate de sodium, est réalisé sous la forme d'une feuille plane 206 qui est calée entre un ressort 214 placé en appui sur la surface plane supérieure 204 et une pièce perforée 215. Cette dernière a la forme d'une coupelle comportant un anneau 216 périphérique rattaché par soudure à la surface plane supérieure 204, une paroi latérale portant des orifices 217 et un disque central 218 doté de bossages 219 qui sont au contact de la feuille plane 206.

Le coussin 205 métallique gonflable étanche est constitué à partir d'une première feuille métallique 220 et d'une seconde feuille métallique 221 pleine bombée, les deux feuilles métalliques étant en acier. Plus précisément, la première feuille métallique 220 possède un orifice lui permettant d'encercler l'anneau 216 de la pièce perforée 215 et comporte une zone de fixation intermédiaire 222 qui est fixée par filetage dans la plaque discoïde 250 au moyen de boulons 223. La première feuille métallique 220 et la seconde feuille métallique 221 possèdent chacune une zone de fixation périphérique 224, 225 et sont fixées par soudure l'une à l'autre au niveau de leur zone de fixation périphérique 224, 225.

En fonctionnement, l'ensemble de sécurité 201 agit de la façon suivante. Lorsque l'unité de centrale électronique détecte une collision nécessitant la mise en fonctionnement dudit ensemble de sécurité 201, elle délivre un courant électrique dans les deux fils électriques qui provoque l'initiation des deux perles d'allumage 209, 210. Ces dernières produisent des gaz chauds qui viennent directement au contact de la feuille plane 206 constituant le chargement pyrotechnique. Cette feuille plane 206 génère alors des gaz chauds qui traversent les orifices 217 de la paroi latérale de la pièce perforée 215 et qui permettent de gonfler totalement et à partir de son centre le coussin 205 métallique gonflable étanche.

Cet ensemble de sécurité 201 est encore plus compact que ceux décrits précédemment et il présente une hauteur maximale h de l'ordre de 1 cm.

Par ailleurs, en fonction de l'emplacement et de l'utilisation souhaités de l'ensemble de sécurité 201, la première feuille métallique 220 et la seconde feuille métallique 221 peuvent avoir une forme générale circulaire, ou rectangulaire, ou encore triangulaire par exemple.

Enfin, le chargement pyrotechnique peut également être réalisé à l'aide d'une poudre en vrac contenue dans un sachet combustible qui est lui-même maintenu par la pièce perforée 215.

En se référant à la figure 4, on observe qu'un ensemble de sécurité 301 selon une autre variante préférée de réalisation de l'invention est constitué à partir d'un corps 302 cylindrique dans lequel est fixé un dispositif d'allumage, ledit corps 302 présentant une surface plane supérieure 304 sur laquelle est rapporté un coussin 305 métallique gonflable étanche renfermant un chargement pyrotechnique.

Plus précisément, le corps 302 a la forme d'une plaque présentant un décrochement central 360. Ce dernier possède un orifice central qui est lui-même prolongé supérieurement par une couronne. Le dispositif d'allumage, qui est réalisé à l'aide d'un allumeur 311 électro-pyrotechnique cylindrique classique muni d'une tête d'allumage 312 et relié à une unité centrale de commande, est alors inséré dans ledit orifice central et la couronne est ensuite rabattue sur l'allumeur 311 de manière à ce que celui-ci soit maintenu par sertissage. L'allumeur 311 cylindrique présente ainsi un axe de révolution qui se confond avec celui de l'ensemble de sécurité 301.

Le chargement pyrotechnique, qui est constitué par une composition pyrotechnique composite comprenant un liant silicone et une charge oxydante à base essentiellement de perchlorate d'ammonium et de nitrate de sodium, est réalisé sous la forme d'une poudre en vrac 306 qui est contenue dans un sachet combustible (non représenté) calé entre la surface plane supérieure 304 et une pièce perforée 315. Cette dernière a la forme d'une coupelle comportant un anneau 316 périphérique rattaché par soudure à la surface plane supérieure 304, une paroi latérale portant des orifice 317 et un disque central.

Le coussin 305 métallique gonflable étanche est constitué à partir d'une première feuille métallique 320 et d'une seconde feuille métallique 321 pleine bombée, les deux feuilles métalliques étant en acier. Plus précisément, la première feuille métallique 320 possède un orifice lui permettant d'encercler l'anneau 316 de la pièce perforée 315 et comporte une zone de fixation intermédiaire 322 qui est fixée par filetage dans le corps 302 au moyen de boulons 323. La première feuille métallique 320 et la seconde feuille métallique 321 possèdent chacune une zone de fixation périphérique 324, 325 et sont fixées par soudure l'une à l'autre au niveau de leur zone de fixation périphérique 324, 325.

En fonctionnement, l'ensemble de sécurité 301 agit de la façon suivante. Lorsque l'unité centrale de commande détecte une collision nécessitant la mise en fonctionnement dudit ensemble de sécurité 301, elle active l'allumeur 311 qui génère alors des gaz chauds allant directement au contact de la poudre en vrac 306. Par combustion, celle-ci produit, dans des délais très brefs, des gaz chauds qui traversent les orifices 317 de la pièce perforée 315 et qui permettent de gonfler totalement et à partir de son centre le coussin 305 métallique gonflable étanche.

Comme décrit précédemment, la première feuille métallique 320 et la seconde feuille métallique 321 peuvent avoir une forme générale circulaire, ou rectangulaire, ou encore triangulaire par exemple.

## Revendications

1. Ensemble de sécurité (1, 101, 201, 301) qui est logé dans un véhicule automobile et qui comprend :
i) un coussin (5, 205, 305) métallique gonflable étanche fixé sur un support,
ii) un chargement pyrotechnique (6, 206, 306),
iii) un dispositif d'allumage (3, 103) destiné à être relié à une source de courant électrique,
caractérisé en ce que,
iv) le coussin métallique gonflable étanche est constitué à partir d'une première feuille métallique (20, 220, 320) qui présente un orifice central, une zone de fixation intermédiaire (22, 222, 322) rattachée au support ainsi qu'une zone de fixation périphérique (24, 224, 324) et d'une seconde feuille métallique (21, 221, 321) pleine bombée qui possède une zone de fixation périphérique (25, 225, 325), les deux feuilles métalliques étant fixées l'une à l'autre au niveau de leur zone de fixation périphérique,
v) le chargement pyrotechnique est contenu dans le coussin métallique gonflable étanche.

2. Ensemble de sécurité (1, 101, 201, 301) selon la revendication 1, caractérisé en ce que le support est constitué par un corps (2, 202, 302) cylindrique présentant une surface plane supérieure (4, 204, 304) sur laquelle est fixée la première feuille métallique (20, 220, 320).

3. Ensemble de sécurité (1, 101, 201, 301) selon la revendication 2, caractérisé en ce qu'une pièce perforée (15, 215, 315), contenue dans le coussin (5, 205, 305) et fixée dans la surface plane supérieure (4, 204, 304) du corps (2, 202, 302), assure le maintien du chargement pyrotechnique (6, 206, 306).

4. Ensemble de sécurité (1, 101, 201) selon la revendication 3, caractérisé en ce que le chargement pyrotechnique est réalisé sous la forme d'une feuille plane (6, 206), ladite feuille plane étant calée entre la pièce perforée (15, 215) et un ressort (14, 214) lui-même en appui sur la surface plane supérieure (4, 204) du corps (2, 202).

5. Ensemble de sécurité (301) selon la revendication 3, caractérisé en ce que le chargement pyrotechnique est constitué par de la poudre en vrac (306).

6. Ensemble de sécurité (1, 101, 201, 301) selon l'une quelconque des revendications 4 ou 5, caractérisé en ce que le chargement pyrotechnique est constitué par une composition pyrotechnique composite comprenant un liant silicone et une charge oxydante minérale.

7. Ensemble de sécurité (1, 101) selon la revendication 2 caractérisé en ce que le corps (2) comporte une ouverture radiale (8) prolongée par un évidement central (9) situé en regard de l'orifice central porté par la première feuille métallique (20).

8. Ensemble de sécurité (1) selon la revendication 7, caractérisé en ce que :
i) le dispositif d'allumage (3) est constitué à l'aide d'un allumeur (11) électro-pyrotechnique lui-même inséré dans un connecteur électrique (13),
ii) ledit dispositif d'allumage est fixé dans l'ouverture radiale (8) du corps (2).

9. Ensemble de sécurité (101) selon la revendication 7, caractérisé en ce que le dispositif d'allumage (103) est constitué à l'aide d'un cordeau pyrotechnique de transmission (130) et d'une charge pyrotechnique relais (131).

10. Ensemble de sécurité (101) selon la revendication 9, caractérisé en ce que :
i) la charge pyrotechnique relais (131) est logée dans l'ouverture radiale (8) portée par le corps (2),
ii) le cordeau pyrotechnique de transmission (130) présente une extrémité (132) qui est insérée dans ladite ouverture radiale et qui est au contact de la charge pyrotechnique relais.

11. ensemble de sécurité (201) selon la revendication 2, caractérisé en ce que :
i) le corps (202) est constitué par une plaque discoïde (250) présentant une paroi latérale (240),
ii) la plaque discoïde est traversée par un canal radial (207) débutant dans ladite paroi latérale et se terminant par au moins deux terminaisons élargies dans la surface plane supérieure (204).

12. Ensemble de sécurité (201) selon la revendication 11, caractérisé en ce que :
i) le canal radial (207) contient deux électrodes conductrices du courant électrique,
ii) chacune des deux terminaisons élargies dudit canal radial contient une perle d'allumage (209,210).

13. Utilisation d'un ensemble de sécurité selon l'une quelconque des revendications 1 à 12 à l'avant de la partie assise d'un siège d'un passager pour surélever ce dernier dans les tout premiers instants suivant une collision.

14. Utilisation d'un ensemble de sécurité selon l'une quelconque des revendications 1 à 12 dans la partie basse de la planche de bord afin de protéger les membres inférieurs des passagers avant du véhicule lors d'une collision.

15. Utilisation d'un ou de plusieurs ensembles de sécurité selon l'une quelconque des revendications 1 à 12 pour augmenter la résistance mécanique de certaines parties de la structure du véhicule lors d'une collision.
